(19) Europäisches Patentamt
European Patent Office
Office européen des brevets

(11) **EP 2 204 400 A1**

(12) **EUROPEAN PATENT APPLICATION**
published in accordance with Art. 153(4) EPC

(43) Date of publication:
**07.07.2010 Bulletin 2010/27**

(21) Application number: **08834003.9**

(22) Date of filing: **19.08.2008**

(51) Int Cl.:
*C08J 5/04* (2006.01)        *B29C 45/00* (2006.01)
*C08K 7/02* (2006.01)        *C08L 67/04* (2006.01)
*B29K 67/00* (2006.01)      *C08L 101/16* (2006.01)

(86) International application number:
**PCT/JP2008/064744**

(87) International publication number:
**WO 2009/041186 (02.04.2009 Gazette 2009/14)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.09.2007 JP 2007251724**

(71) Applicant: **Fujifilm Corporation Tokyo 106-0031 (JP)**

(72) Inventor: **KAWASAKI, Hidetoshi Odawara-shi Kanagawa 250-0001 (JP)**

(74) Representative: **HOFFMANN EITLE Patent- und Rechtsanwälte Arabellastrasse 4 81925 München (DE)**

(54) **INJECTION-MOLDED ARTICLE OF ORGANIC-FIBER-REINFORCED POLYLACTIC ACID RESIN**

(57)      An object of providing an injection-molded polylactic acid resin article composed of a resin composition with a polylactic acid resin content of 50% by weight or more, which has a higher strength than conventional articles and is applicable as a constituent part for larger products with heavier weights such as copying machines and printers, is achieved by providing a molded article obtainable by injection molding of a resin composition containing a polylactic acid resin and super engineering-plastic fibers. For the molded article as provided, the lactic acid component content A (% by weight) and the super engineering-plastic fiber content B (% by weight) of the resin composition, the mean thickness X (mm) and the weight Y (kg) of the molded article, as well as the length L ($\mu$m) and the cross-sectional diameter D ($\mu$m) of the super engineering-plastic fibers satisfy specified relations.

EP 2 204 400 A1

**Description**

TECHNICAL FIELD

The present invention relates to injection-molded articles of an organic fiber-reinforced polylactic acid resin.

BACKGROUND ART

Recently, attempts have been made from the viewpoint of contributing to the prevention of global warming and the establishment of a sound material-cycle society to apply the constituent parts which are made of a biomass resin derived from a biological source such as plants (polylactic acid resin, for instance) to a variety of products.
In fact, such parts involve a serious problem of an inadequate mechanical strength. Some measures have previously been proposed in order to remedy this drawback.
As an example, the constituent part has been proposed for which a composition comprising polylactic acid with petroleum-based fibers mixed therein is used. By mixing petroleum-based fibers in polylactic acid, the strength of the constituent part is more improved in principle as the mixing ratio of the fibers is increased.
Patent Document 1 has proposed the fiber-reinforced polylactic acid resin composition containing polylactic acid, glass fibers, and talc with a mean particle size of 0.1 to 3 $\mu$m that contains the glass fibers in a proportion of 5 to 60% by weight, and the talc in a proportion of 5 to 25% by weight, with respect to the whole amount of the fiber-reinforced polylactic acid resin. Patent Document 1 describes that a novel fiber-reinforced polylactic acid resin composition is provided according to the proposed composition, and the molding, injection molding for instance, of the polylactic acid resin composition as provided yields the molded articles of a biodegradable plastic which are heat resistant and have a good mechanical strength such as a high impact resistance.
Patent Document 2 has proposed the kenaf fiber-reinforced resin composition which is a biodegradable resin composition (polylactic acid being preferred) containing kenaf fibers, and has a kenaf fiber content of 10 to 50% by weight. Patent Document 2 describes that molded bodies obtained by the molding of the kenaf fiber-reinforced resin composition as proposed have not only an improved mechanical strength but a greatly enhanced heat resistance.

　　Patent Document 1: JP 2004-7198 A
　　Patent Document 2: JP 2003-407799 A

DISCLOSURE OF THE INVENTION

PROBLEMS TO BE SOLVED BY THE INVENTION

The use of the compositions of Patent Documents 1 and 2 as stated above allows indeed the strength of molded articles to be improved to some extent as compared with the case of using a polylactic acid resin alone.
Constituent parts (molded articles) composed of such compositions, however, are difficult to employ as a constituent part for such larger products as copying machines and printers. The reason is as follows: Products such as copying machines need higher strengths because of their large sizes and heavy weights as compared with cellular phones or the like, whereas the constituent parts which are obtained with the compositions as described in Patent Documents 1 and 2 cannot have such a strength as a constituent part for larger products should have.
In the constituent part for which a composition comprising polylactic acid with petroleum-based fibers mixed therein is used as mentioned above, those strengths which constituent parts for larger products should have can be attained by increasing the mixing ratio of the petroleum-based fibers. For this purpose, it is necessary to increase the mixing ratio of the petroleum-based fibers to about 70% (that is to say, reduce the polylactic acid content to no more than about 30%), which makes it impossible to contribute to the prevention of global warming and the establishment of a sound material-cycle society.
The present invention is aimed at solving the problems as stated above.
In other words, an object of the present invention is to provide an injection-molded article composed of a resin composition containing a polylactic acid resin and having a lactic acid component content of 50% by weight or more, which has a higher strength than conventional articles and is applicable as a constituent part for larger products with heavier weights such as copying machines and printers. Another object of the present invention is to provide a cabinet comprising such a molded article as its major constituent part. To provide an electronic system including such a cabinet is also an object of the present invention.

**EP 2 204 400 A1**

MEANS TO SOLVE THE PROBLEMS

The inventor of the present invention diligently researched in order to solve the aforementioned problems and has found that the problems can be solved if a molded article contains a polylactic acid resin and specified super engineering-plastic fibers, whereupon a specified relationship exists between the thickness and weight of the molded article and the recipe of the resin composition to be molded, the present invention having thus been competed.

The present invention provides (1) through (7) as below.

(1) A molded article obtainable by injection molding of a resin composition comprising a polylactic acid resin and super engineering-plastic fibers, wherein the lactic acid component content A (% by weight) and the super engineering-plastic fiber content B (% by weight) of the resin composition, the mean thickness X (mm) and the weight Y (kg) of the injection-molded article, as well as the length L ($\mu$m) and the cross-sectional diameter D ($\mu$m) of the super engineering-plastic fibers meet Formulae (I) to (VIII) below:

$$\text{Formula (I): } A \geq 50;$$

$$\text{Formula (II): } B/A = 0.05 \sim 0.40;$$

$$\text{Formula (III): } X \geq 2.0;$$

$$\text{Formula (IV): } Y/X = 0.03 \sim 2.5;$$

$$\text{Formula (V): } (B/A)/X = 0.017 \sim 0.20;$$

$$\text{Formula (VI): } D = 1 \sim 20;$$

$$\text{Formula (VII): } L/D = 100 \sim 1,000;$$

and

$$\text{Formula (VIII): } (B/A) \times (L/D) = 5.0 \sim 200.$$

(2) The molded article according to the above (1), which is obtainable by compounding and injection molding of the resin composition at a temperature lower than the melting point of the super engineering-plastic fibers by 20 to 60°C.

(3) The molded article according to the above (1) or (2), wherein the super engineering-plastic fibers have a tensile strength of 50 MPa or more, an impact strength of 50 kJ/m$^2$ or more, and a deflection temperature under load of 150°C or more.

(4) The molded article according to any one of the above (1) through (3), wherein the super engineering-plastic fibers are made of at least one selected from the group consisting of polyphenylene sulfide, polyarylate, para-aramid, and polyimide.

(5) A cabinet comprising the molded article according to any one of the above (1) through (4) as its major constituent part.

(6) An electronic system which includes the cabinet according to the above (5) and weighs 10 kg or more.

3

(7) The electronic system according to the above (6), which is a copying machine, a printer, a photoprinting apparatus, a printing press, a medical instrument, or an instrument for life-science use.

EFFECTS OF THE INVENTION

According to the present invention, an injection-molded article composed of a resin composition containing a polylactic acid resin and having a lactic acid component content of 50% by weight or more, which has a higher strength than conventional articles and is applicable as a constituent part for larger products with heavier weights such as copying machines and printers, can be provided. A cabinet comprising such a molded article as its major constituent part, and an electronic system including such a cabinet can also be provided.

BEST MODE FOR CARRYING OUT THE INVENTION

The present invention is hereafter described in detail.

The molded article of the present invention is a molded article obtainable by injection molding of a resin composition comprising a polylactic acid resin and super engineering-plastic fibers, in which the lactic acid component content A (% by weight) and the super engineering-plastic fiber content B (% by weight) of the resin composition, the mean thickness X (mm) and the weight Y (kg) of the injection-molded article, as well as the length L ($\mu$m) and the cross-sectional diameter D ($\mu$m) of the super engineering-plastic fibers meet Formulae (I) to (VIII) as below.

$$\text{Formula (I): } A \geq 50$$

$$\text{Formula (II): } B/A = 0.05 \sim 0.40$$

$$\text{Formula (III): } X \geq 2.0$$

$$\text{Formula (IV): } Y/X = 0.03 \sim 2.5$$

$$\text{Formula (V): } (B/A)/X = 0.017 \sim 0.20$$

$$\text{Formula (VI): } D = 1 \sim 20$$

$$\text{Formula (VII): } L/D = 100 \sim 1,000$$

$$\text{Formula (VIII): } (B/A) \times (L/D) = 5.0 \sim 200$$

The molded article of the present invention as such has a higher strength than conventional articles.

In the following description, the terms "a high strength," "of high strength," and similar terms used with respect to molded articles refer to such a high strength as a major constituent part for larger electronic systems, such as copying machines and printers, should have. To be more specific, the molded article of the present invention exhibits an Izod impact strength of 5 or more when subjected to the Izod impact test defined by JIS K-7110. An Izod impact strength of 10 or more is preferred.

Initially illustrated is the resin composition to be used as a material for the molded article of the present invention. The resin composition for the molded article of the present invention contains a polylactic acid resin and super engineering-plastic fibers, having a lactic acid component content A (% by weight) (hereafter also referred to simply as "content A") of 50% by weight or more. If the polylactic acid resin is a lactic acid copolymer resin as mentioned later, and lactic acid units comprise 80% by weight of the lactic acid copolymer, for instance, the ratio (percentage) of eight-tenths of the weight of the lactic acid copolymer resin to the total weight of the resin composition is 50% by weight or more. If the polylactic acid resin is a lactic acid monopolymer resin, the ratio (percentage) of the weight of the lactic acid monopolymer resin to the total weight of the resin composition is 50% by weight or more.

The resin composition as above is able to contribute to the prevention of global warming and the establishment of a sound material-cycle society because of its content A of 50% by weight or more.

The content A is preferably not less than 60% by weight, more preferably not less than 70% by weight, and even more preferably not less than 80% by weight. The content A can be increased by suitably modifying the compounding temperature and the injection molding temperature as described later.

The polylactic acid resin is not particularly limited in type. Exemplary resins include lactic acid monopolymer resins and lactic acid copolymer resins.

In addition, the lactic acid component as a raw material for the polylactic acid resin is not particularly limited in type but may be L-lactic acid, D-lactic acid, DL-lactic acid, or a mixture thereof, or else, a cyclic dimer of lactic acid, namely L-lactide, D-lactide, meso-lactide, or a mixture thereof.

The technique for preparing the polylactic acid resin is not particularly limited either. The resin may be synthesized by a conventional technique. For instance, a lactic acid monopolymer resin can be obtained by the direct dehydrocondensation of L-lactic acid, D-lactic acid, DL-lactic acid, or a mixture thereof, or the ring-opening polymerization of L-lactide, D-lactide, meso-lactide, or a mixture thereof. A lactic acid copolymer resin can be obtained by the copolymerization of the lactic acid monomer or lactide with other component copolymerizable with the monomer. Other copolymerizable component is exemplified by dicarboxylic acids, polyhydric alcohols, hydroxycarboxylic acids and lactones, each having two or more ester linkage-forming functional groups in the molecule, as well as diverse polyesters, polyethers and polycarbonates comprising the aforementioned various components.

The weight-average molecular weight of the Polylactic acid resin is not particularly limited either but may be 50,000 to 500,000, preferably 100,000 to 250,000. A weight-average molecular weight of 50,000 or more is favorable because it imparts a higher strength to the molded article of the present invention. On the other hand, a weight-average molecular weight of 500,000 or less is favorable because it allows the resin composition to be readily uniform, which is likely to increase the strength of the molded article of the present invention.

Apart from the polylactic acid resin as described above, the resin composition contains super engineering-plastic fibers.

The content of the super engineering-plastic fibers in the resin composition, namely the super engineering-plastic fiber content B (% by weight) (hereafter also referred to simply as "content B") of the resin composition is such that the ratio of the content B to the content A (ratio B/A) is 0.05 to 0.40. As long as the ratio falls within such range, the super engineering-plastic fibers may be the sole component of the resin composition other than the polylactic acid resin (that is to say, the sum of the content A and the content B may be 100% by weight) or one of other components than the resin. To the content A as the proportion of the polylactic acid resin, the content B preferably bears a ratio (B/A) of 0.10 to 0.20 because the molded article of the present invention will have a higher strength.

The term "super engineering-plastic fibers" as used herein refers to fibers of a super engineering plastic as defined in "Kobunshi-Jiten (Dictionary of Polymers)" 3rd edition, edited by the Society of Polymer Science, Japan and published on June 30, 2005 by Asakura Publishing Co., Ltd., p. 830, such as polyphenylene sulfide (PPS), polyarylate (PAR), polysulfone (PSU), polyethersulfone (PES), polyetherimide (PEI), polyamideimide (PAI), para-aramide, liquid crystal polymer (LCP), and polyimide (PI).

The resin composition contains fibers of at least one such super engineering plastic.

It is preferable among others that the super engineering-plastic fibers are made of at least one selected from the group consisting of polyphenylene sulfide (PPS), polyarylate (PAR), para-aramid, and polyimide (PI). These plastics are excellent in cost performance.

The length (hereafter also referred to as "length L") of the super engineering-plastic fibers is not particularly limited but is preferably 100 to 20,000 $\mu$m, more preferably 1,000 to 10,000 $\mu$m. At the same time, values of the aspect ratio, which is the ratio of the length L to the diameter D ("diameter D" as defined later) (L/D), are required to lie within the defined bounds, as described later.

The cross section of the super engineering-plastic fibers is not particularly limited in shape but may be circular. A circular cross section, as reducing the production costs of the super engineering-plastic fibers and enhancing the dispersibility of the fibers in the resin composition, is preferable. A cross section in a special shape, such as a star-shaped cross section, a polygonal cross section, a cross section irregular in shape and a cross section with indentations, or a cross section as a composite of those in special shapes may also be available. Such cross sections are preferable because they increase the area of contact with the polylactic acid resin in the resin composition so as to improve the adhesion between the fibers and the resin, which is likely to increase the strength of the molded article of the present invention.

The cross-sectional diameter (hereafter also referred to as "diameter D") of the super engineering-plastic fibers is 1 to 20 $\mu$m, meeting Formula (VI) as set forth before. The diameter D is preferably 5 to 15 $\mu$m.

While a smaller diameter D is preferable because the molded article of the present invention tends to have a higher mechanical strength accordingly, too small a diameter may make injection molding difficult, or cause the resin composition to be hard to make uniform. In addition, with such a diameter, the costs are generally increased. Consequently, it is advantageous that the diameter D meets Formula (VI).

The "diameter D" refers to the diameter of the cross section which is obtained by cutting a super engineering-plastic fiber perpendicularly to its longitudinal direction. If the super engineering-plastic fibers have a cross section other than a circular one, the diameter of the circle which is equivalent to the cross section in area (Heywood diameter) is to be referred to.

The aspect ratio (L/D) as the ratio between the length L and the diameter D is 100 to 1,000, meeting Formula (VII) as set forth before. The ratio L/D is preferably 200 to 500.

In this connection, the parameter expressed as (B/A) x (L/D) is 5.0 to 200 in value, meeting Formula (VIII) as set forth before. The value of (B/A) x (L/D) is preferably 20 to 100.

The inventor of the present invention found out a correlation between the aspect ratio and the MD shrink. Specifically, it was found that too high an aspect ratio increases the MD shrink so as to readily cause cracks at the surfaces of the super engineering-plastic fibers, leading to a reduced mechanical strength of the molded article of the present invention as obtained by injection molding.

Cracks are generated at the surfaces of the super engineering-plastic fibers exclusively by the thermal shrinkage of the fibers, a phenomenon deemed to be due to the internal stress of the fibers in themselves.

It was also found that the molded article of the present invention has a reduced mechanical strength if the aspect ratio is too low. Finally, the inventor found that the molded article of the present invention has a higher mechanical strength if the aspect ratio falls within a specific range as above.

The abovementioned MD shrink is to be construed as the ratio of shrinkage of a super engineering-plastic fiber in its longitudinal direction.

Preferably, the surfaces of the super engineering-plastic fibers are coated with a surfactant. The affinity of the super engineering-plastic fibers with the polylactic acid resin is improved by the coating, so that voids are unlikely to be formed around the super engineering-plastic fibers, with the strength of the molded article being increased. Examples of the surface treating agent which may be used include isophthalate esters.

It is preferable that the super engineering-plastic fibers have a tensile strength of 50 MPa or more, an impact strength of 50 kJ/m$^2$ or more, and a deflection temperature under load of 150˚C or more. The fibers with such properties impart higher strength and heat resistance to the molded article.

The deflection temperature under load is to be measured by the method defined by JIS K7191.

The tensile strength is to be measured by the method defined by JIS K7161 and K7162 both titled "Plastics - Determination of tensile properties -".

The impact strength is to be measured by the method defined as a method of determining the Izod impact strength of plastics (JIS K7110) or a method of determining the Charpy impact strength of plastics (JIS K7111).

It is preferable that the resin composition containing the polylactic acid resin and the super engineering-plastic fibers as described above further contains a plasticizer. The plasticizer content is not limited but is preferably 1 to 30% by weight, more preferably 10 to 20%. Addition of a plasticizer allows the compounding temperature and the injection molding temperature during molded article manufacture to be lowered, so that the molded article obtained has a higher strength. In other words, addition of a plasticizer allows the resin composition to be made uniform enough even at lower compounding and injection molding temperatures than the case with no plasticizers added, so that the heat load on the super engineering-plastic fibers is reduced, leading to a less deterioration of the super engineering-plastic fibers and a higher strength of the molded article.

During the manufacture of the molded article of the present invention, the compounding temperature and the injection molding temperature can favorably be reduced from those in the case with no plasticizers added by about 10˚C.

The plasticizer which the resin composition can contain is not particularly limited, and examples thereof include phthalate-, phosphate-, adipate- or other ester-based plasticizers, and epoxy-based plasticizers.

The resin composition, which contains the polylactic acid resin and the super engineering-plastic fibers, and preferably contains the plasticizer as well, may contain some additional components, such as antioxidant, heat resistance stabilizer, ultraviolet absorber, light stabilizer, antistatic agent, neutralizing agent, pigment or other colorant, dispersant, rosin, synthetic rubber, inorganic additive, flame retarder, antifungal agent, perfume, mold release agent, and antihydrolysis agent.

The amount of such additional components is preferably 20% by weight or less, more preferably 10% by weight or less, in total.

Next, the dimensions of the molded article of the present invention are explained.

The molded article of the present invention has a mean thickness (hereafter also referred to as "mean thickness X" or simply as "X," and expressed in "mm") meeting Formula (III) below, and Formula (IV) as well when Y represents the weight (kg) of the molded article.

$$\text{Formula (III): } X \geq 2.0$$

$$\text{Formula (IV): } Y/X = 0.03 \sim 2.5$$

The value of Y/X is preferably 0.05 to 1.0, more preferably 0.1 to 0.5.

The molded article of the present invention is so thin and large as to have such a value of Y/X as above, and has a high strength.

By making the abovementioned B/A, L/D, and so forth fall within their respective preferable ranges, or adding a plasticizer, even a thinner and heavier molded article can be obtained as having a high strength. The same results will be achieved if a more preferable temperature is employed for the compounding or injection molding of a resin composition during the manufacture of the molded article of the present invention as described later.

As an example, the molded article may have a mean thickness X of 3 mm or more and a weight Y of 0.3 kg or more. The molded article may also have a mean thickness X of 4 mm or more and a weight Y of 0.4 kg or more, or a mean thickness X of 6 mm or more and a weight Y of 0.6 kg or more, or even a mean thickness X of 10 mm or more and a weight Y of 1.0 kg or more, as required.

In this regard, the mean thickness X refers to the arithmetic mean for thickness at any ten points of the molded article of the present invention.

The molded article of the present invention also meets the following Formula (V).

$$\text{Formula (V): } (B/A)/X = 0.017 \sim 0.20$$

The value of (B/A)/X is preferably 0.03 to 0.15, more preferably 0.05 to 0.10. With such values, the molded article has a higher strength.

The inventor of the present invention found that the strength of the molded article of the present invention is particularly improved if there is a relation expressed by Formula (V) between the ratio of the content B to the content A of the resin composition and the mean thickness X of the molded article. The inventor also found that, in that case, an improved strength is satisfactory as a high strength required of a molded article meeting Formulae (III) and (IV).

The molded article of the present invention is preferably a molded article obtained by compounding and injection molding of the resin composition at a temperature lower than the melting point of the super engineering-plastic fibers by 20 to 60°C. The temperature is preferably lower than the melting point of the super engineering-plastic fibers by 30 to 50°C. The molded article of the present invention may be manufactured favorably by the manufacturing method of the present invention as described later.

In the present invention, the melting point of the super engineering-plastic fibers is to be measured by Method C (10°C/min) defined by JIS K7314-2.

The molded article of the present invention is as described above.

It is preferable to fabricate a cabinet using the molded article of the present invention as its major constituent part because a cabinet of high strength is obtained. To be more specific, the cabinet to be fabricated is preferably a cabinet with a capacity of 100 to 5,000 cc, more preferably a cabinet with a capacity of 500 to 2,000 cc. Even a cabinet with such a capacity will have a required high strength.

It is also preferable to apply such a cabinet to an electronic system. An electronic system provided with such a cabinet is favorable because of its high strength. Even if the electronic system weighs 10 kg or more, for instance, a higher strength as required will be attained.

Specific examples of the electronic system to be provided with such a cabinet include copying machines, printers, photoprinting apparatus, printing presses, medical instruments, and instruments for life-science use.

The following description is made on the method of manufacturing the molded article of the present invention. The molded article of the present invention does not need to be manufactured by a particular method but may be manufactured by the preferred method as below (also referred to as "the manufacturing method of the present invention"), for instance.

In the manufacturing method of the present invention, the resin composition containing the polylactic acid resin and the super engineering-plastic fibers is prepared through the compounding at a temperature lower than the melting point of the super engineering-plastic fibers by 20 to 60˚C. More preferably, the compounding temperature is lower than the melting point of the super engineering-plastic fibers by 30 to 50˚C. If that is the case, the molded article of the present invention will have a higher strength. The polylactic acid resin will be contained in the resin composition in a higher proportion, as stated before. In addition, the MD shrink of the super engineering-plastic fibers will be reduced.
In the manufacturing method of the present invention, the compounding temperature is defined as the maximum temperature which the resin composition has during compounding.

The compounding is not particularly limited in method thereof. As an example, a known compounder may be used to carry out compounding. Typical known compounders include a twin screw compounder, such as the model TEM-26SS from TOSHIBA MACHINE.
As mentioned above, the compounding temperature is defined as the maximum temperature which the resin composition has during compounding. If the compounding is carried out by using a twin screw compounder, the maximum temperature which the resin composition has between the kneading zone and the tip zone of screws is generally considered as the compounding temperature.

The resin composition which has been compounded is preferably pelletized for the injection molding with a molding machine.

Pelletizing of the resin composition is not particularly limited in method thereof. A known pelletizer may be used to form pellets. Typical known pelletizers include the model SCF-100 manufactured by Kobe Steel.

The size and shape of pellets are not limited either. Exemplary pellets are of a cylindrical shape, with the diameter of a circular cross section being 2 to 3 mm and the height being 5 to 10 mm.

According to the manufacturing method of the present invention, the resin composition which is obtained through the processes as above is injection molded at a temperature lower than the melting point of the super engineering-plastic fibers by 20˚C or more. The injection molding temperature is preferably lower than the melting point of the super engineering-plastic fibers by 20 to 60˚C, more preferably by 30 to 50˚C. In that case, the molded article of the present invention will have a higher strength. The polylactic acid resin will be contained in the resin composition in a higher proportion, as stated before. In addition, the MD shrink of the super engineering-plastic fibers will be reduced. It is favorable in particular if both the compounding temperature and the injection molding temperature fall within their respective preferable ranges as above because the molded article of the present invention will have an even higher strength.
The injection molding temperature is defined as the maximum temperature which the resin composition has during injection molding.

The method of injection molding is not particularly limited, but a known injection molding method may be employed. In an exemplary method, the resin composition as pelletized or the like is melted by heating, then pressed by a plunger or screw so that it may be poured into a mold until the mold is filled with the composition, and a molded article is obtained by solidifying or curing the resin composition in the mold.
To be more specific, usable injection molding methods include the method in which the resin composition is injection molded on an in-line screw system to obtain the molded article of the present invention. The injection molding method on an in-line screw system comprises the step of loading a hopper with a resin composition in pellet form, the step of plasticization and measurement in a heating cylinder, the step of injection from the heating cylinder into a mold, the step of dwell and cooling in the mold, and the step of removal after mold opening.

As mentioned above, the injection molding temperature is defined as the maximum temperature which the resin composition has during injection molding. If injection molding is carried out on an in-line screw system, the temperature which the resin composition has in the vicinity of a nozzle immediately before it is poured into a mold is generally considered as the injection molding temperature.

By the manufacturing method of the present invention as described above, the molded article of the present invention can be manufactured.

EXAMPLES

<Example 1>

The polylactic acid resin used was LACEA (registered trademark) (product number, H-100; manufactured by Mitsui Chemicals, Inc.), and fibers of a polyphenyl sulfide (PPS) (trade name, TORCON; chopped fibers; manufactured by Toray Industries, Inc.) were used as super engineering-plastic fibers.
The super engineering-plastic fibers had a diameter D of 15 $\mu$m, a length L of 5,000 $\mu$m, and a ratio L/D of 333.

The polylactic acid resin and the super engineering-plastic fibers as above were mixed together by using a twin screw compounding extruder (manufactured by TOSHIBA MACHINE CO., LTD.; product number, TEM-26SS). The amounts of the polylactic acid resin and the super engineering-plastic fibers were 4 kg in total, and the mixing ratio between the polylactic acid resin and the super engineering-plastic fibers was 80:20 (by weight). The compounding temperature was 220˚C. After compounding, the resin composition as extruded was cut by a cutter into pellets ca. 7 mm long having an almost circular cross section with a diameter of 2 to 3 mm, and the pellets were immersed in tap water.

Subsequently, the resin composition in pellet form was removed from tap water, and dried by a dryer for about eight hours under such conditions that the temperature was 80˚C and the relative humidity was about 0%, then injection molded at an injection molding temperature of 220˚C to obtain a cabinet. The cabinet was 200 mm square with a mean thickness X of 3.0 mm and a weight Y of 0.6 kg. Injection molding was carried out using the electric injection molding machine manufactured by FANUC LTD whose product number is S-2000i100A. This type of injection molding machine is capable of controlling the thickness of molded articles.

Next, a notched specimen was cut out of the cabinet according to JIS K-7110. While the specimen had the same length and width as Type 1 specimen defined by JIS K-7110 (length, 80 $\pm$ 2 mm; width, 10.0 $\pm$ 0.2 mm; thickness, 4.0 $\pm$ 0.2 mm), its thickness was kept identical to that of the cabinet (3.0 mm). The notch made in the specimen was of Type A defined by JIS K-7110 (notch radius, 0.25 $\pm$ 0.05 mm; width of notched portion, 8.0 $\pm$ 0.2 mm). The notched specimen had a weight of 3.3 to 3.8 g.

The Izod impact test as defined by JIS K-7110 was conducted on the notched specimen to measure the Izod impact strength thereof. The Izod impact strength measurement is set forth in Table 1.

Apart from the notched specimen as above, a specimen (100 mm long and 100 mm wide, with the thickness being identical to that of the cabinet (3.0 mm)) was cut out of the cabinet so as to conduct thereon a steel ball drop test. In the test, the specimen was horizontally positioned on a surface plate, then a steel ball of 500 g in weight located directly above the specimen was dropped onto the specimen from the level 100 mm above the specimen, and the specimen was inspected for fractures and cracks. In Table 1, the symbol "X" denotes that the specimen was fractured or cracked, while the symbol "O" denotes that the specimen was not fractured or cracked.

Table 1 also shows whether or not the compounding and molding as described before were carried out adequately. The symbol "O" denotes adequate compounding and molding. On the other hand, the symbol "X" denotes an impossible compounding or injection molding due to too low a flowability of the resin, or occurrence of sink marks on the molded article.

<Example 2>

The procedure of Example 1 was followed to carry out the testing, with the exception that fibers of a polyarylate (PA) (trade name, Vectran; chopped fibers; manufactured by KURARAY Co., Ltd.) were used instead of the PPS fibers, the injection molding temperature was not 220˚C but 230˚C, and that the weight Y was not 0.6 kg but 0.8 kg. The test results are set forth in Table 1.

<Example 3>

The procedure of Example 1 was followed to carry out the testing, with the exception that a para-aramid (trade name, Twaron; manufactured by TEIJIN LIMITED) was used instead of PPS, the injection molding temperature was not 220˚C but 250˚C, and that the weight Y was not 0.6 kg but 1.0 kg.

The test results are set forth in Table 1.

<Example 4>

The plylactic acid resin and the PPS fibers as used in Example 1, as well as an additional phosphate ester (trade name, PX-200; manufactured by DAIHACHI CHEMICAL INDUSTRY CO., LTD.) were mixed together in the manner of Example 1. The amounts of the polylactic acid resin, the PPS fibers and the phosphate ester were 4 kg in total, as was the case with the total amount of materials in Example 1. The mixing ratio between the polylactic acid resin, the super engineering-plastic fibers and the phosphate ester was 70:20:10 (by weight). The injection molding temperature was changed from 220˚C as in Example 1 to 210˚C, and the weight Y from 0.6 kg as in Example 1 to 0.3 kg. Following the otherwise unchanged procedure of Example 1, the testing was carried out.

Further conducted was a flame retardancy test, a test according to the safety standard UL 94 set up by Underwriters Laboratories Inc. of the USA.

The test results are set forth in Table 1.

<Example 5>

The procedure of Example 1 was followed to carry out the testing, with the exception that fibers of a polyimide (trade name, PI fiber P84; manufactured by TOYOBO CO., LTD.) were used instead of the PPS fibers, the injection molding temperature was not 220˚C but 250˚C, and that the weight Y was not 0.6 kg but 1.0 kg. The test results are set forth in Table 1.

<Example 6>

The procedure of Example 4 was followed to carry out the testing including the flame retardancy test, with the exception that the mixing ratio between the polylactic acid resin, the super engineering-plastic fibers and the phosphate ester was not 70:20:10 but 50:20:30 (by weight), the injection molding temperature was not 210˚C but 210˚C, and that the weight Y was not 0.3 kg but 0.6 kg. The test results are set forth in Table 1.

<Example 7>

The procedure of Example 1 was followed to carry out the testing, with the exception that the mixing ratio between the polylactic acid resin and the super engineering-plastic fibers was not 80:20 but 95:5 (by weight), and the weight Y was not 0.6 kg but 0.3 kg. The test results are set forth in Table 1.

<Example 8>

The procedure of Example 1 was followed to carry out the testing, with the exception that the injection molding temperature was not 220˚C but 250˚C, and the weight Y was not 0.6 kg but 1.0 kg. The test results are set forth in Table 1.

<Example 9>

The procedure of Example 2 was followed to carry out the testing, with the exception that the injection molding temperature was not 230˚C but 260˚C, and the weight Y was not 0.8 kg but 1.0 kg. The test results are set forth in Table 1.

<Example 10>

The procedure of Example 1 was followed to carry out the testing, with the exception that the mixing ratio between the polylactic acid resin and the super engineering-plastic fibers was not 80:20 but 95.2:4.8, and the weight Y was not 0.6 kg but 1.0 kg. The test results are set forth in Table 1.

<Example 11>

The procedure of Example 1 was followed to carry out the testing, with the exception that the mixing ratio between the polylactic acid resin and the super engineering-plastic fibers was not 80:20 but 77:23, and the weight Y was not 0.6 kg but 1.0 kg. The test results are set forth in Table 1.

<Example 12>

The procedure of Example 1 was followed to carry out the testing, with the exception that the super engineering-plastic fibers used were identical to those used in Example 1 in material and length L but had a different diameter D (D = 20 $\mu$m), the mixing ratio between the polylactic acid resin and the super engineering-plastic fibers was not 80:20 but 95.2:4.8, and that the weight Y was not 0.6 kg but 1.0 kg. The test results are set forth in Table 1.

<Example 13>

The procedure of Example 1 was followed to carry out the testing, with the exception that the super engineering-plastic fibers used were identical to those used in Example 1 in material and length L but had a different diameter D (D = 10 $\mu$m), the mixing ratio between the polylactic acid resin and the super engineering-plastic fibers was not 80:20 but 71.5:28.5, and that the weight Y was not 0.6 kg but 1.0 kg. The test results are set forth in Table 1.

<Example 14>

The procedure of Example 12 was followed to carry out the testing, with the exception that the super engineering-plastic fibers used were identical to those used in Example 12 in material and length L but had a different diameter D (D = 1 $\mu$m). The test results are set forth in Table 1.

<Example 15>

The procedure of Example 1 was followed to carry out the testing, with the exception that the thickness of the cabinet obtained by injection molding was not 3.0 mm but 2.0 mm. The test results are set forth in Table 1.

<Comparative Example 1>

Talc (product number, C-3; manufactured by NIPPON TALC Co., Ltd.) and glass fibers (chopped strands; filament diameter, 10 pm; number of bundled filaments, 2,000; manufactured by Asahi Fiber Corporation) were used.
The talc and the glass fibers, as well as the same polylactic acid resin as Example 1 were mixed together by using the same twin screw compounding extruder as Example 1. The amounts of the polylactic acid resin, the talc and the glass fibers were 4 kg in total, and the mixing ratio between the polylactic acid resin, the talc and the glass fibers was 70:15:15 (by weight). The compounding temperature was 220˚C. Pellets similar to those obtained in Example 1 were obtained in a similar manner.
The resin composition in pellet form as obtained was injection molded at an injection molding temperature of 220˚C. The thickness of the cabinet obtained by injection molding was changed from 3.0 mm as in Example 1 to 1.5 mm. Then, a notched specimen similar to that provided in Example 1 was provided in a similar manner, and subjected to the same tests as Example 1. The test results are set forth in Table 1.
The testing of Comparative Example 1 was performed as an additional experiment on the composition as described in Patent Document 1.

<Comparative Example 2>

Kenaf (mean fiber length, 300 $\mu$m to 20 mm) was used.
The kenaf and the same polylactic acid resin as Example 1 were mixed together by using the same twin screw compounding extruder as Example 1. The amounts of the polylactic acid resin and the kenaf were 4 kg in total, and the mixing ratio between the polylactic acid resin and the kenaf was 80:20 (by weight). The compounding temperature was 220˚C. Pellets similar to those obtained in Example 1 were obtained in a similar manner.
The resin composition in pellet form as obtained was injection molded at an injection molding temperature of 220˚C. The thickness of the cabinet obtained by injection molding was changed from 3.0 mm as in Example 1 to 1.5 mm. Then, a notched specimen similar to that provided in Example 1 was provided in a similar manner, and subjected to the same tests as Example 1. The test results are set forth in Table 1.
The testing of Comparative Example 2 was performed as an additional experiment on the composition as described in Patent Document 2.

<Comparative Example 3>

The procedure of Example 1 was followed to carry out the testing, with the exception that the injection molding temperature was not 220˚C but 270˚C, the thickness of the cabinet obtained by injection molding was not 3.0 mm but 1.5 mm, and that the weight Y was not 0.6 kg but 1.0 kg. The test results are set forth in Table 1.

<Comparative Example 4>

The procedure of Example 2 was followed to carry out the testing, with the exception that the injection molding temperature was not 230˚C but 280˚C, the thickness of the cabinet obtained by injection molding was not 3.0 mm but 1.5 mm, and that the weight Y was not 0.8 kg but 1.0 kg. The test results are set forth in Table 1.

<Comparative Example 5>

The procedure of Example 3 was followed to carry out the testing, with the exception that the injection molding temperature was not 250˚C but 300˚C, and the thickness of the cabinet obtained by injection molding was not 3.0 mm but 1.5 mm. The test results are set forth in Table 1.

<Comparative Example 6>

The procedure of Example 5 was followed to carry out the testing, with the exception that the injection molding temperature was not 250˚C but 300˚C, and the thickness of the cabinet obtained by injection molding was not 3.0 mm but 1.5 mm. The test results are set forth in Table 1.

<Comparative Example 7>

The procedure of Example 1 was followed to carry out the testing, with the exception that the mixing ratio between the polylactic acid resin and the super engineering-plastic fibers was not 80:20 but 96:4, the thickness of the cabinet obtained by injection molding was not 3.0 mm but 1.5 mm, and that the weight Y was not 0.6 kg but 1.0 kg. The test results are set forth in Table 1.

<Comparative Example 8>

The procedure of Example 1 was followed to carry out the testing, with the exception that the mixing ratio between the polylactic acid resin and the super engineering-plastic fibers was not 80:20 but 76:24, the thickness of the cabinet obtained by injection molding was not 3.0 mm but 1.5 mm, and that the weight Y was not 0.6 kg but 1.0 kg. The test results are set forth in Table 1.

<Comparative Example 9>

The procedure of Example 1 was followed to carry out the testing, with the exception that the super engineering-plastic fibers used were identical to those used in Example 1 in material and diameter D but had a different length L (L = 1,350 $\mu$m), the thickness of the cabinet obtained by injection molding was not 3.0 mm but 1.5 mm, and that the weight Y was not 0.6 kg but 1.0 kg. The test results are set forth in Table 1.

<Comparative Example 10>

The procedure of Example 1 was followed to carry out the testing, with the exception that the super engineering-plastic fibers used were identical to those used in Example 1 in material and diameter D but had a different length L (L = 16,500 $\mu$m), the thickness of the cabinet obtained by injection molding was not 3.0 mm but 1.5 mm, and that the weight Y was not 0.6 kg but 1.0 kg. The test results are set forth in Table 1.

<Comparative Example 11>

The procedure of Example 1 was followed to carry out the testing, with the exception that the thickness of the cabinet obtained by injection molding was not 3.0 mm but 50 mm, and the weight Y was not 0.6 kg but 1.0 kg. The test results are set forth in Table 1.

<Comparative Example 12>

The procedure of Example 1 was followed to carry out the testing, with the exception that the mean thickness of the cabinet obtained by injection molding was not 3.0 mm but 0.38 mm, and the weight Y was not 0.6 kg but 1.0 kg. The test results are set forth in Table 1.

<Comparative Example 13>

The procedure of Example 1 was followed to carry out the testing, with the exception that the super engineering-plastic fibers used were identical to those used in Example 1 in material and length L but had a different diameter D (D = 20 $\mu$m), the mixing ratio between the polylactic acid resin and the super engineering-plastic fibers was not 80:20 but 95.3:4.7, the thickness of the cabinet obtained by injection molding was not 3.0 mm but 1.5 mm, and that the weight Y was not 0.6 kg but 1,0 kg. The test results are set forth in Table 1.

<Comparative Example 14>

The procedure of Example 1 was followed to carry out the testing, with the exception that the super engineering-plastic fibers used were identical to those used in Example 1 in material and length L but had a different diameter D (D = 10 $\mu$m), the mixing ratio between the polylactic acid resin and the super engineering-plastic fibers was not 80:20 but 71:29, the thickness of the cabinet obtained by injection molding was not 3.0 mm but 1.5 mm, and that the weight Y was not 0.6 kg but 1.0 kg. The test results are set forth in Table 1.

<Comparative Example 15>

The procedure of Example 10 was followed to carry out the testing, with the exception that the super engineering-plastic fibers used were identical to those used in Example 10 in material and length L but had a different diameter D (D = 50 μm). The test results are set forth in Table 1.

<Comparative Example 16>

The procedure of Example 10 was followed to carry out the testing, with the exception that the super engineering-plastic fibers used were identical to those used in Example 10 in material and length L but had a different diameter D (D = 0.9 μm). The test results are set forth in Table 1.

[Table 1]

Table 1 (1/3)

| | Example | | | | | | | | | |
|---|---|---|---|---|---|---|---|---|---|---|
| | 1 | 2 | 3 | 4 | 5 | 6 | 7 | 8 | 9 | 10 |
| Polylactic acid resin [wt%] | 80 | 80 | 80 | 70 | 80 | 50 | 95 | 80 | 80 | 95.2 |
| PPS fibers [wt%] | 20 | | | 20 | | 20 | 5 | 20 | | 4.8 |
| PA fibers [wt%] | | 20 | | | | | | | 20 | |
| Para-aramid [wt%] | | | 20 | | | | | | | |
| PI [wt%] | | | | | 20 | | | | | |
| Phosphate ester [wt%] | | | | 10 | | 30 | | | | |
| Talc [wt%] | | | | | | | | | | |
| Glass fibers [wt%] | | | | | | | | | | |
| Kenaf [wt%] | | | | | | | | | | |
| a: Melting point [°C] | 280 | 290 | 310 | 280 | 310 | 280 | 280 | 280 | 290 | 280 |
| b: Injection molding temperature [°C] | 220 | 230 | 250 | 210 | 250 | 220 | 220 | 250 | 260 | 220 |
| a - b | 60 | 60 | 60 | 70 | 60 | 60 | 60 | 30 | 30 | 60 |
| B/A | 0.25 | 0.25 | 0.25 | 0.25 | 0.25 | 0.4 | 0.05 | 0.25 | 0.25 | 0.05 |
| X [mm] | 3.0 | 3.0 | 3.0 | 3.0 | 3.0 | 3.0 | 3.0 | 3.0 | 3.0 | 3.0 |
| Y [kg] | 0.6 | 0.8 | 1.0 | 0.3 | 1.0 | 0.6 | 0.3 | 1.0 | 1.0 | 1.0 |
| Y/X | 0.2 | 0.27 | 0.33 | 0.1 | 0.33 | 0.2 | 0.1 | 0.33 | 0.33 | 0.33 |
| (B/A)/X | 0.083 | 0.083 | 0.083 | 0.083 | 0.083 | 0.132 | 0.017 | 0.083 | 0.083 | 0.017 |
| D [mm] | 15 | 15 | 15 | 15 | 15 | 15 | 15 | 15 | 15 | 15 |
| L/D | 333 | 333 | 333 | 333 | 333 | 333 | 333 | 333 | 333 | 333 |
| (B/A) x (L/D) | 83 | 83 | 83 | 83 | 83 | 133 | 17 | 83 | 83 | 5 |
| Compounding/molding | ○ | ○ | ○ | ○ | ○ | ○ | ○ | ○ | ○ | ○ |
| Steel ball drop | ○ | ○ | ○ | ○ | ○ | ○ | ○ | ○ | ○ | ○ |
| Impact strength [kJ/m²] | 15 | 20 | 27 | 9 | 28 | 15 | 9 | 13 | 14 | 8.5 |
| Flame retardancy | - | - | - | V0 | - | 5VB | - | - | - | - |

[Table 2]

Table 1 (2/3)

| | Example | | | | | Comparative Example | | | | | |
|---|---|---|---|---|---|---|---|---|---|---|---|
| | 11 | 12 | 13 | 14 | 15 | 1 | 2 | 3 | 4 | 5 | 6 |
| Polylactic acid resin [wt%] | 77 | 95.2 | 71.5 | 95.2 | 80 | 70 | 80 | 80 | 80 | 80 | 80 |
| PPS fibers [wt%] | 23 | 4.8 | 28.5 | 4.8 | 20 | | | 20 | | | |
| PA fibers [wt%] | | | | | | | | | 20 | | |
| Para-aramid [wt%] | | | | | | | | | | 20 | |
| PI [wt%] | | | | | | | | | | | 20 |
| Phosphate ester [wot%] | | | | | | | | | | | |
| Talc [wt%] | | | | | | 15 | | | | | |
| Glass fibers [wt%] | | | | | | 15 | | | | | |
| Kenaf [wt%] | | | | | | | 20 | | | | |
| a: Melting point [˚C] | 280 | 280 | 280 | 280 | 280 | | | 280 | 290 | 310 | 310 |
| b: Injection molding temperature [˚C] | 220 | 220 | 220 | 220 | 220 | 220 | 220 | 270 | 280 | 300 | 300 |
| a - b | 60 | 60 | 60 | 60 | 60 | | | 10 | 10 | 10 | 10 |
| B/A | 0.3 | 0.05 | 0.4 | 0.05 | 0.25 | 0.21 | 0.25 | 0.25 | 0.25 | 0.25 | 0.25 |
| X [mm] | 3.0 | 3.0 | 3.0 | 3.0 | 2.0 | 1.5 | 1.5 | 1.5 | 1.5 | 1.5 | 1.5 |
| Y [kg] | 1.0 | 1.0 | 1.0 | 1.0 | 0.6 | 1.0 | 1.0 | 1.0 | 1.0 | 1.0 | 1.0 |
| Y/X | 0.33 | 0.33 | 0.33 | 0.33 | 0.3 | 0.67 | 0.67 | 0.67 | 0.67 | 0.67 | 0.67 |
| (B/A)/X | 0.1 | 0.017 | 0.13 | 0.017 | 0.125 | 0.14 | 0.17 | 0.17 | 0.17 | 0.17 | 0.17 |
| D [mm] | 15 | 20 | 10 | 1 | 15 | 15 | 15 | 15 | 15 | 15 | 15 |
| L/D | 333 | 250 | 500 | 1000 | 333 | 333 | 333 | 333 | 333 | 333 | 333 |
| (B/A) x (L/D) | 100 | 12.5 | 200 | 50 | 83 | 70 | 83 | 83 | 83 | 83 | 83 |
| Compounding/molding | ○ | ○ | ○ | ○ | ○ | ○ | ○ | ○ | ○ | ○ | ○ |
| Steel ball drop | ○ | ○ | ○ | ○ | ○ | X | X | X | X | X | X |
| Impact strength [kJ/m²] | 19 | 6.5 | 23 | 5.9 | 15 | 4.5 | 3.8 | 3.5 | 4.5 | 4.8 | 4.8 |
| Flame retardancy | - | - | - | - | - | - | - | - | - | - | - |

[Table 3]

Table 1 (3/3)

| | Comparative Example | | | | | | | | | |
|---|---|---|---|---|---|---|---|---|---|---|
| | 7 | 8 | 9 | 10 | 11 | 12 | 13 | 14 | 15 | 16 |
| Polylactic acid resin [wt%] | 96 | 76 | 80 | 80 | 80 | 80 | 95.3 | 71 | 95.2 | 95.2 |
| PPS fibers [wt%] | 4 | 24 | 20 | 20 | 20 | 20 | 4.7 | 29 | 4.8 | 4.8 |
| PA fibers [wt%] | | | | | | | | | | |
| Para-aramid [wt%] | | | | | | | | | | |
| PI [wt%] | | | | | | | | | | |
| Phosphate ester [wt%] | | | | | | | | | | |

(continued)

| | Comparative Example | | | | | | | | | |
|---|---|---|---|---|---|---|---|---|---|---|
| | 7 | 8 | 9 | 10 | 11 | 12 | 13 | 14 | 15 | 16 |
| Talc [wt%] | | | | | | | | | | |
| Glass fibers [wt%] | | | | | | | | | | |
| Kenaf [wt%] | | | | | | | | | | |
| a: Melting point [˚C] | 280 | 280 | 280 | 280 | 280 | 280 | 280 | 280 | 280 | 280 |
| b: Injection molding temperature [˚C] | 220 | 220 | 220 | 220 | 220 | 220 | 220 | 220 | 220 | 220 |
| a - b | 60 | 60 | 60 | 60 | 60 | 60 | 60 | 60 | 60 | 60 |
| B/A | 0.042 | 0.32 | 0.25 | 0.25 | 0.25 | 0.25 | 0.049 | 0.41 | 0.05 | 0.05 |
| X [mm] | 1.5 | 1.5 | 1.5 | 1.5 | 50 | 0.38 | 1.5 | 1.5 | 3.0 | 3.0 |
| Y [kg] | 1.0 | 1.0 | 1.0 | 1.0 | 1.0 | 1.0 | 1.0 | 1.0 | 1.0 | 1.0 |
| Y/X | 0.67 | 0.67 | 0.67 | 0.67 | 0.02 | 2.6 | 0.67 | 0.67 | 0.33 | 0.33 |
| (B/A)/X | 0.028 | 0.21 | 0.17 | 0.17 | 0.005 | 0.65 | 0.033 | 0.27 | 0.017 | 0.017 |
| D [mm] | 15 | 15 | 15 | 15 | 15 | 15 | 20 | 10 | 50 | 0.9 |
| L/D | 333 | 333 | 90 | 1100 | 333 | 333 | 250 | 500 | 100 | 5556 |
| (B/A) x (L/D) | 4.7 | 97 | 23 | 275 | 83 | 83 | 12.25 | 205 | 5 | 278 |
| Compounding/molding | ○ | X*1 | ○ | X*1 | X*2 | X*1 | ○ | X*1 | ○ | ○ |
| Steel ball drop | X | - | X | - | - | - | X | - | X | X |
| Impact strength [kJ/m$^2$] | 4.9 | - | 3.5 | - | - | - | 4.9 | - | 4.7 | 3.9 |
| Flame retardancy | - | - | - | - | - | - | - | - | - | - |

*1: Compounding and injection molding as well were impossible due to too low a flowability of the resin.
*2: Sink marks occurred on the molded article.

In each of Examples 1 to 7, the Izod impact strength was 9 or more, a high value as compared with either of Comparative Examples 1 and 2, and values were especially high in Examples 3 and 5.
Molded articles having such high Izod impact strengths are applicable as a constituent part for larger products with heavier weights such as copying machines and printers.
To be more specific: In the case of Examples 4 and 7 where the thickness (X) was 3.0 mm and the impact strength was 9 kJ/m$^2$, a molded article with a weight (Y) of 0.3 kg (Y/X = 0.10) can be obtained for a constituent part for larger products with heavier weights.
Similarly, in the case of Examples 1 and 6 where the impact strength was 15 kJ/m$^2$, a molded article with a weight (Y) of 0.6 kg (Y/X = 0.20) can be obtained.
In the case of Example 2 where the impact strength was 20 kJ/m$^2$, a molded article with a weight (Y) of 0.8 kg (Y/X = 0.27) can be obtained.
In the case of Example 3 where the impact strength was 27 kJ/m$^2$ and the case of Example 5 where the impact strength was 28 kJ/m$^2$, a molded article with a weight (Y) of 1.0 kg (Y/X = 0.33) can be obtained.
The molded articles within the scope of the present invention as above are applicable as a constituent part for larger products with heavier weights such as copying machines and printers.
The flame retardancy was of the UL 94 V0 rating in Example 4, and of the 5VB rating in Example 6.
In Comparative Examples 3 to 10, X was 1.5 mm and, accordingly, did not lie within the bounds defined in the present invention. In Comparative Example 7, B/A did not lie within the defined bounds, either. In Comparative Example 8, not only X but (B/A)/X was out of the defined bounds. The impact strength as measured in Comparative Example 7 was as low as less than 5. In each of Comparative Examples 8 and 10, the resin composition was too low in flowability to pelletize as a continuous strand. When discontinuous strands were pelletized off-line to subject the pellets to injection molding, short shot occurred and the molding failed.
In Comparative Examples 11 and 12, Y/X and (B/A)/X were out of their respective bounds defined in the present invention. Sink marks occurred on the molded article of Comparative Example 11. The resin composition prepared in Comparative Example 12 was too low in flowability to compound.

In Comparative Example 13, X and (B/A) were out of their respective bounds defined in the present invention. In Comparative Example 14, (B/A)/X was also out of the bounds defined in the present invention. The impact strength as measured in Comparative Example 13 was as low as less than 5. The resin composition prepared in Comparative Example 14 was too low in flowability to compound.

As described above, compounding or molding was impossible or, even if molding succeeded, the impact strength was as low as less than 5 kJ/m$^2$ in Comparative Examples.

Molded articles having such low strengths are not applicable as a constituent part for larger products with heavier weights such as copying machines and printers.

**Claims**

1. A molded article obtainable by injection molding of a resin composition comprising a polylactic acid resin and super engineering-plastic fibers, wherein:

   lactic acid component content A (% by weight) and super engineering-plastic fiber content B (% by weight) of the resin composition;
   mean thickness X (mm) and weight Y (kg) of the injection-molded article; as well as
   length L ($\mu$m) and cross-sectional diameter D ($\mu$m) of the super engineering-plastic fibers
   meet Formulae (I) to (VIII) below:

$$\text{Formula (I): } A \geq 50;$$

$$\text{Formula (II): } B/A = 0.05 \sim 0.40;$$

$$\text{Formula (III): } X \geq 2.0;$$

$$\text{Formula (IV): } Y/X = 0.03 \sim 2.5;$$

$$\text{Formula (V): } (B/A)/X = 0.017 \sim 0.20;$$

$$\text{Formula (VI): } D = 1 \sim 20;$$

$$\text{Formula (VII): } L/D = 100 \sim 1,000;$$

   and

$$\text{Formula (VIII): } (B/A) \times (L/D) = 5.0 \sim 200.$$

2. The molded article according to claim 1, which is obtainable by compounding and injection molding of said resin composition at a temperature lower than the melting point of said super engineering-plastic fibers by 20 to 60$^\circ$C.

3. The molded article according to claim 1 or 2, wherein said super engineering-plastic fibers have a tensile strength of 50 MPa or more, an impact strength of 50 kJ/m$^2$ or more, and a deflection temperature under load of 150˚C or more.

4. The molded article according to any one of claims 1 through 3, wherein said super engineering-plastic fibers are made of at least one selected from the group consisting of polyphenylene sulfide, polyarylate, para-aramid, and polyimide.

5. A cabinet comprising the molded article according to any one of claims 1 through 4 as its major constituent part.

6. An electronic system which includes the cabinet according to claim 5 and weighs 10 kg or more.

7. The electronic system according to claim 6, which is a copying machine, a printer, a photoprinting apparatus, a printing press, a medical instrument, or an instrument for life-science use.

## INTERNATIONAL SEARCH REPORT

| International application No. |
|---|
| PCT/JP2008/064744 |

A. CLASSIFICATION OF SUBJECT MATTER
*C08J5/04*(2006.01)i, *B29C45/00*(2006.01)i, *C08K7/02*(2006.01)i, *C08L67/04*(2006.01)i, *B29K67/00*(2006.01)n, *C08L101/16*(2006.01)n

According to International Patent Classification (IPC) or to both national classification and IPC

B. FIELDS SEARCHED

Minimum documentation searched (classification system followed by classification symbols)
C08J5/00-5/22, B29C45/00-45/84, C08K3/00-13/08, C08L1/00-101/16

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-23250 A (Mitsubishi Plastics, Inc.), 27 January, 2005 (27.01.05), Claims; Par. Nos. [0022] to [0025], [0031] to [0033], [0059], [0065] to [0067] (Family: none) | 1-7 |
| X | JP 2006-176644 A (Toyobo Co., Ltd.), 06 July, 2006 (06.07.06), Claims; Par. Nos. [0017] to [0019]; examples (Family: none) | 1-7 |
| X | WO 2007/15371 A1 (Unitika Ltd.), 08 February, 2007 (08.02.07), Claims; Par. Nos. [0036], [0058] to [0060], [0069], [0070], [0085]; examples & EP 1911809 A1 | 1-7 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 November, 2008 (13.11.08) | 25 November, 2008 (25.11.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/064744

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2007-56088 A  (Sumitomo Chemical Co., Ltd.), 08 March, 2007 (08.03.07), Claims; Par. Nos. [0057], [0074], [0091], [0099] (Family: none) | 1-7 |
| X | JP 2007-91790 A  (Toyobo Co., Ltd.), 12 April, 2007 (12.04.07), Claims; Par. Nos. [0011], [0015], [0016], [0023], [0024]; examples (Family: none) | 1-7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004007198 A

- JP 2003407799 A

**Non-patent literature cited in the description**

- Kobunshi-Jiten (Dictionary of Polymers). Asakura Publishing Co., Ltd, 30 June 2005, 830